# EUROPEAN PATENT APPLICATION

(11) **EP 2 424 175 A1**
(43) Date of publication of application: **29.02.2012**
(21) Application number: 09843526.6
(22) Date of filing: 22.04.2009
(51) Int. Cl.: H04L 12/56

(54) **A METHOD, SYSTEM AND NETWORK EQUIPMENT FOR REALIZING THE LOCAL IP ACCESS**

(71) Applicant: Huawei Technologies Co., Ltd., Shenzhen, Guangdong 518129 (CN)
(72) Inventor: LIU, Xiaohan, Guangdong 518129 (CN); CHEN, Jing, Guangdong 518129 (CN); LIU, Hai, Guangdong 518129 (CN)
(74) Representative: Pfenning, Meinig & Partner GbR
(86) International application number: PCT/CN2009/071399
(87) International publication number: WO 2010/121421

(57) **Abstract**

A method for implementing local Internet Protocol (IP) access includes: obtaining User Equipment (UE)'s first information that is used for implementing local IP access; and implementing local IP access of the UE according to the first information. A system for implementing local IP access is disclosed by the present invention. The system can communicate with UE and includes: a NodeB, configured to obtain UE's first information that is used for implementing local IP access, and implement local IP access of the UE according to the first information; and a core network node, configured to assist the NodeB in obtaining the UE's first information that is used for implementing local IP access. Besides, relevant network devices are also disclosed.

## Description

### FIELD OF THE INVENTION

The present invention relates to communication technologies, and in particular, to a method, a system, and a network device for implementing local IP access.

### BACKGROUND OF THE INVENTION

With development of the international Internet and popularization of various wireless services, users raise requirements on high speed, convenience, and cost efficiency of wireless networks. However, from the prospective of operators, operators need to make full use of the existing network resources, expand the capacity, reduce the cost, and provide better services for users.

A Home NodeB (Home (e)NodeB, H(e)NB) is put forward to meet the foregoing requirements and network development requirements. HNB is a micro NodeB applied in a home environment. A mobile user may deploy an HNB in the hotspot area such as home and office, and the User Equipment (UE) accesses the mobile communication network through the Internet to obtain wireless communication services. The HNB is introduced to overcome the bottleneck of air interface resources in wireless data service, and enable the user to enjoy high-rate and high-bandwidth network services. Through access to the Internet, the HNB saves the transmission expenditure of the mobile operator and improves the capacity of the mobile network. The application of the HNB improves coverage of the mobile network and optimizes the network quality.

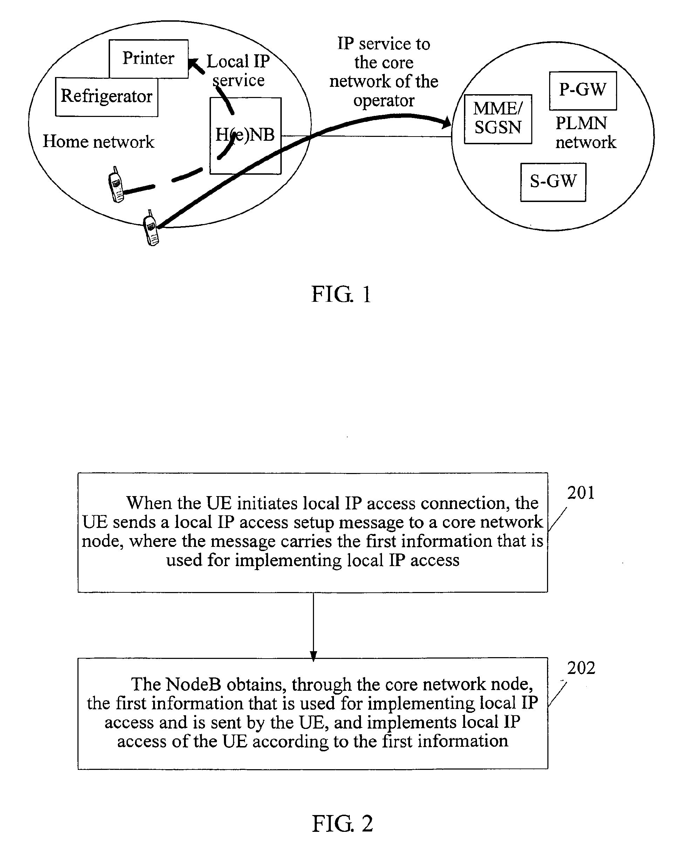

In the process of developing the present invention, after research, the inventor finds that: In the scenario shown in FIG. 1, for an HNB, data has to travel on a traditional access route, as shown by solid lines in FIG. 1. That is, the data sent by the UE to the home devices such as printer, copier and television in the home network has to be forwarded to relevant devices by a Core Network (CN). For the user devices and home devices under the same HNB, the existing access mode is too complicated and leads to waste of resources.

### SUMMARY OF THE INVENTION

An embodiment of the present invention provides a method, a system, and a network device for implementing local IP access so that the NodeB supports local IP access and data communication can be performed between the UE and the home device directly through the NodeB.

The embodiments of the present invention provide the following technical solutions:

An embodiment of the present invention provides a method for implementing local IP access, including:
obtaining UE's first information that is used for implementing local IP access; and
implementing local IP access of the UE according to the first information.

An embodiment of the present invention provides a NodeB, including:
a first obtaining unit, configured to obtain UE's first information that is used for implementing local IP access; and
a first processing unit, configured to implement local IP access of the UE according to the first information.

An embodiment of the present invention provides a core network node, including:
a second obtaining unit, configured to obtain UE's first information that is used for implementing local IP access; and
a first sending unit, configured to send the first information that is used for implementing local IP access.

An embodiment of the present invention provides a Policy and Charging Rules Function (PCRF), including:
a judging unit, configured to judge whether a current service is a local IP access service; and
a second sending unit, configured to transmit UE's first information that is used for implementing local IP access to a NodeB through a core network node if the judging unit judges that the current service is a local IP access service.

An embodiment of the present invention provides a system for implementing local IP access. The system can communicate with UE and includes:
a NodeB, configured to obtain UE's first information that is used for implementing local IP access, and implement local IP access of the UE according to the first information; and
a core network node, configured to assist the NodeB in obtaining the UE's first information that is used for implementing local IP access.

The method, the system, and the network device for implementing local IP access are provided in the embodiments of present invention so that the NodeB can support local IP access and the UE can communicate with the home device directly through the NodeB. Further, when the UE initiates a local IP access service, the relevant nodes in a Radio Access Network (RAN) and a core network can obtain information required for local IP access, and complete different operations according to different service data streams, thereby completing the whole service procedure of local IP access and reducing the processing load of certain nodes.

### BRIEF DESCRIPTION OF THE DRAWINGS

FIG. 1 is a schematic diagram of an application scenario in the prior art;
FIG. 2 is a method flowchart according to Embodiment 1 of the present invention;
FIG. 3 is a signaling flowchart according Embodiment 1 of the present invention;
FIG. 4 is a schematic diagram of an application scenario according to Embodiment 1 of the present invention;
FIG. 5 is a schematic diagram of another application scenario according to Embodiment 1 of the present invention;
FIG. 6 is a schematic diagram of another application scenario according to Embodiment 1 of the present invention;
FIG. 7 is a method flowchart according to Embodiment 2 of the present invention;
FIG. 8 is a signaling flowchart according Embodiment 2 of the present invention;
FIG. 9 is a method flowchart according to Embodiment 3 of the present invention;
FIG. 10 is a signaling flowchart according Embodiment 3 of the present invention;
FIG. 11 is a schematic structure diagram of an HNB according to Embodiment 4 of the present invention;
FIG. 12 is a schematic structure diagram of a core network node according to Embodiment 5 of the present invention; and
FIG. 13 is a schematic structure diagram of a PCRF according to Embodiment 6 of the present invention.

### DETAILED DESCRIPTION OF THE EMBODIMENTS

As shown by dotted lines in FIG. 1, local IP access is required in the HNB currently. That is, the UE under the HNB accesses other IP devices in the home network directly without involving the core network. Embodiments of the present invention provide a method, a system, and a network device for implementing local IP access, so that the NodeB can support local IP access and the UE can communicate with the home device directly through the NodeB. The embodiments of the present invention are applicable not only to local IP access of the HNB, but also to local IP access of macro base stations. Therefore, the HNB is taken as an example in the following description about the local IP access, and persons skilled in the art can easily apply the technical solutions of the present invention to macro base stations. To make the technical solutions, objectives and merits of the present invention clearer, with reference to accompanying drawings, the following describes the present invention in more detail by taking the embodiments for example.

### Embodiment 1

FIG. 2 is a method flowchart provided in Embodiment 1 of the present invention. The method includes the following steps:
Step 201: When the UE initiates local IP access connection, the UE sends a local IP access setup message to the core network node, where the message carries the first information that is used for implementing local IP access.
Step 202: The NodeB obtains, through the core network node, the first information that is used for implementing local IP access, and implements local IP access of the UE according to the first information.

It should be noted that in this embodiment, in order to perform the local IP access service, the UE needs to support the following function: The UE needs to be capable of judging whether a service data stream is a local IP access data stream or an ordinary service data stream.

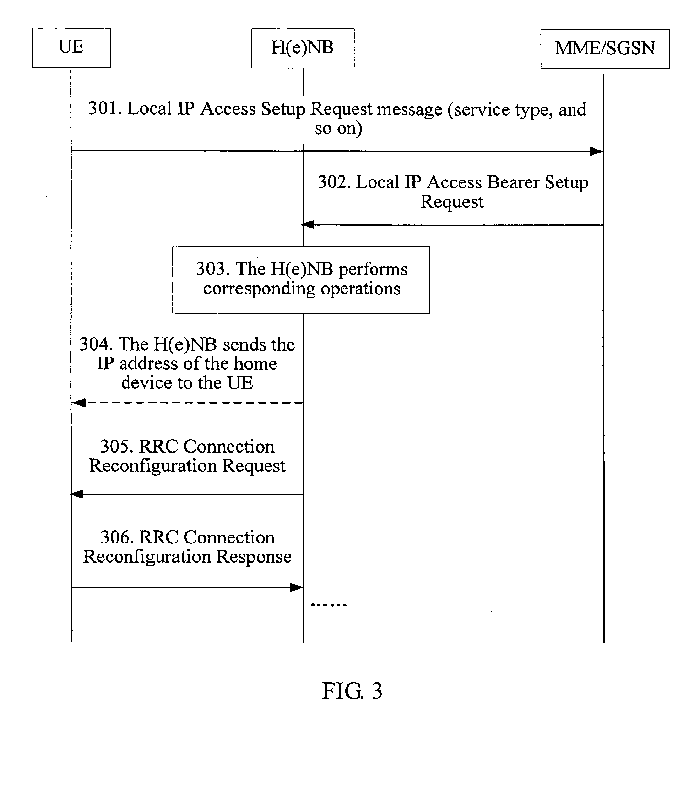

As shown in FIG. 3, the signaling flow includes the following steps:
Step 301: When the UE initiates local IP access connection, the UE sends a Local IP Setup message to the core network node through a Non Access Stratus (NAS) message, where the Local IP Setup message carries information about local IP access.

The information about local IP access optionally includes but is not limited to: service type indication indicating whether the service is a local IP access service, called party identifier, bearer identifier, Quality of Service (QoS)-related information, and all other information related to local IP access.

The Local IP Setup message may be a newly added message, or may be a reused existing NAS message in the communication system, and the Information Elements (IEs) related to the local IP access are added in the message.

In order to reuse the signaling message in the existing network, for the local IP access in a Long Term Evolution (LTE) system, IEs related to local IP access may be added into the NAS message such as PDN Connectivity Request message or Bearer Resource Modification Request message to meet the requirement of transmitting the information about local IP access. For a Universal Mobile Telecommunications System (UMTS), an Activate PDP Context Request message or an Activate Secondary PDP Context Request message may be reused as the NAS message, and the IEs related to local IP access are added into the NAS message to meet the requirement of transmitting the information about local IP access.

Step 302: The core network node sends a message to the H(e)NB after performing corresponding operations so as to instruct to set up a bearer for the local IP access.

The corresponding operations performed by the core network node include but are not limited to: judging whether the link is a local link, and whether the UE is entitled to initiate a local link; and setting relative states for the UE.

For a system that supports Policy and Charging Control (PCC), the core network node such as Mobility Management Entity (MME) or Serving GPRS Supporting Node (SGSN) needs to send the corresponding local IP access information to other nodes in the core network for further processing, and perform proper processing according to information returned by such nodes.

The message sent by the core network node to the H(e)NB may be a newly added message, or may be a reused existing message in the communication system; and IEs related to the local IP access are added in the message.

The content of the message sent by the core network node to the H(e)NB optionally includes but is not limited to one or multiple of the following: service type indication such as local IP access identifier, called party identifier, and other local IP access information.

To reuse the signaling message in the existing system, the existing Request Bearer Resource Setup/Modification message in the LTE system may be modified properly and reused, for example, IEs related to the local IP access are added into the existing Request Bearer Resource Setup/Modification message. In a UMTS, the existing Create PDP Context Request message may be reused. That is, the IEs related to the local IP access are added into the existing Create PDP Context Request message.

Step 303: The H(e)NB performs corresponding operations and initiates setup of an air interface bearer.

The corresponding operations performed by the H(e)NB include user-plane operations, which may include: (1) dynamically setting up and maintaining a local IP access bearer list initiated by the UE that initiates the service, for example, adding an entry into a mapping relationship table when the UE initiates the local IP access service, and deleting the corresponding entry when the UE releases the local IP access service; and (2) routing data correctly according to the foregoing entry, for example, routing the bearer data in the list locally rather than sending the bearer data in the list to an S1 interface or an Iu interface.

The user-plane operations that are included in the corresponding operations performed by the H(e)NB includes: (1) setting up a local route list according to the destination IP address; and (2) determining a correct route according to whether the destination address is incorporated in the local route list after PDCP resolution, for example, performing local routing if the destination address is incorporated in the local route list, or forwarding the data to the S1 interface or Iu interface if the destination address is not incorporated in the local route list.

Besides, the H(e)NB may create the air interface bearer through a corresponding procedure in the existing protocol. For example, in an LTE system, the air interface bearer is created through a Radio Resource Control (RRC) Connection reconfiguration procedure; in a UMTS, the air interface bearer is created through a radio bearer setup procedure.

Step 304: The H(e)NB sends an RRC Connection Reconfiguration Request to the UE.

Step 305: The UE returns an RRC Connection Reconfiguration Response to the H(e)NB.

Step 306: The H(e)NB finishes setting up the local IP access bearer and notifies the core network node that the local IP access bearer is set up. The signaling flow in the existing system can be completely reused for steps 304-306.

For the local IP access initiated in different systems, the MME or the SGSN may interact with other nodes in the core network in the following modes as required:

### Application Scenario 1:

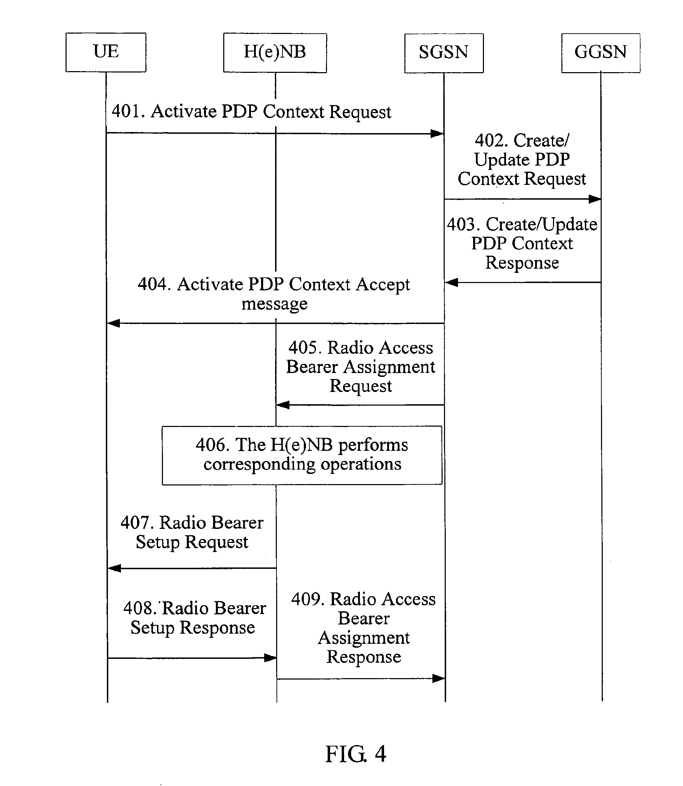

As shown in FIG. 4, the local IP access is initiated in a pre-R8 UMTS core network, and the local IP access indication may be carried to a Gateway GPRS Supporting Node (GGSN) through steps 402-403. Accordingly, the GGSN will not create any bearer for this service any more. This application scenario includes the following steps:
Step 401: When the UE initiates local IP access connection, the UE sends a Local IP Setup message to the core network node through a NAS message. For details, refer to step 301 in the foregoing embodiment.
Step 402: The SGSN sends a message to the GGSN.

This message may be formed by adding properly IEs into an existing signaling. For example, this message may be: Create/Update PDP Context Request message. This message carries a local IP access identifier for the GGSN to perform corresponding operations. The corresponding operations performed by the GGSN may include: performing no more bearer between the SGSN and the GGSN for local IP access.

Step 403: The GGSN returns a response message to the SGSN.

The message may be formed by adding properly IEs into an existing signaling. For example, the message may be a Create/Update PDP Context Request message.

Step 404: The SGSN returns a response message to the UE. If the Activate PDP Context Request message is reused in step 401, an Activate PDP Context Accept message may be reused for the response message.

Step 405: The SGSN sends a corresponding message to the H(e)NB so as to instruct to create a bearer for the local IP access. For example, the message may be a Radio Access Bearer Assignment Request. For details, refer to step 302 in the embodiment above.

Steps 406-409 are the same as steps 303-306 in the embodiment above.

### Application Scenario 2:

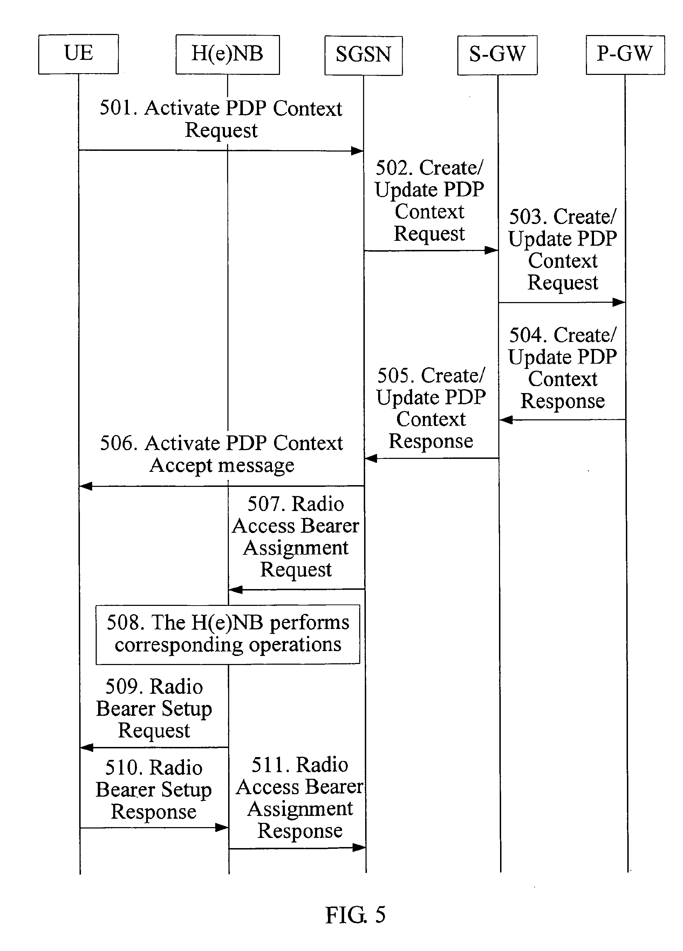

As shown in FIG. 5, the local IP access is initiated in a UMTS core network of R8 and later versions. The local IP access indication may be carried to a Serving Gateway (SGW), a Packet Data Network (PDN) Gateway (PGW) and a PCRF through steps 502-506. The SGW, PGW, and PCRF perform corresponding operations accordingly, for example, create no more link between the H(e)NB and the PGW for this service. This application scenario includes the following steps:
Step 501: When the UE initiates local IP access connection, the UE sends a Local IP Setup message to the core network node through a NAS message. For details, refer to step 301 in the foregoing embodiment.
Step 502 and step 503: The SGSN sends relevant information about local IP access to the SGW and the PGW through a Create/Update PDP Context Request message.
Step 504: Signaling interaction is performed between the PGW and the PCRF by reusing the existing PCC protocol.

The message in steps 502-504 may carry a local IP access identifier for the PCRF, PGW, and SGW to perform corresponding operations. The corresponding operations may include: creating no more bearer between the SGW and the PGW for local IP access.

Step 505 and step 506: The PGW sends relevant information about local IP access to the SGW and the SGSN through a Create/Update PDP Context Response message.

Step 507: The SGSN returns a response message to the UE. If the Activate PDP Context Request message is reused in step 501, the response message may be an Activate PDP Context Accept message may be reused for the response message.

Step 508: The SGSN sends a message to the H(e)NB so as to instruct to create a bearer for the local IP access. For example, the message may be a Radio Access Bearer Assignment Request. For details, refer to step 302 in the embodiment above.

Steps 509-512 in this embodiment are basically the same as steps 303-306 in the embodiment above, and are not repeated here any further.

### Application Scenario 3:

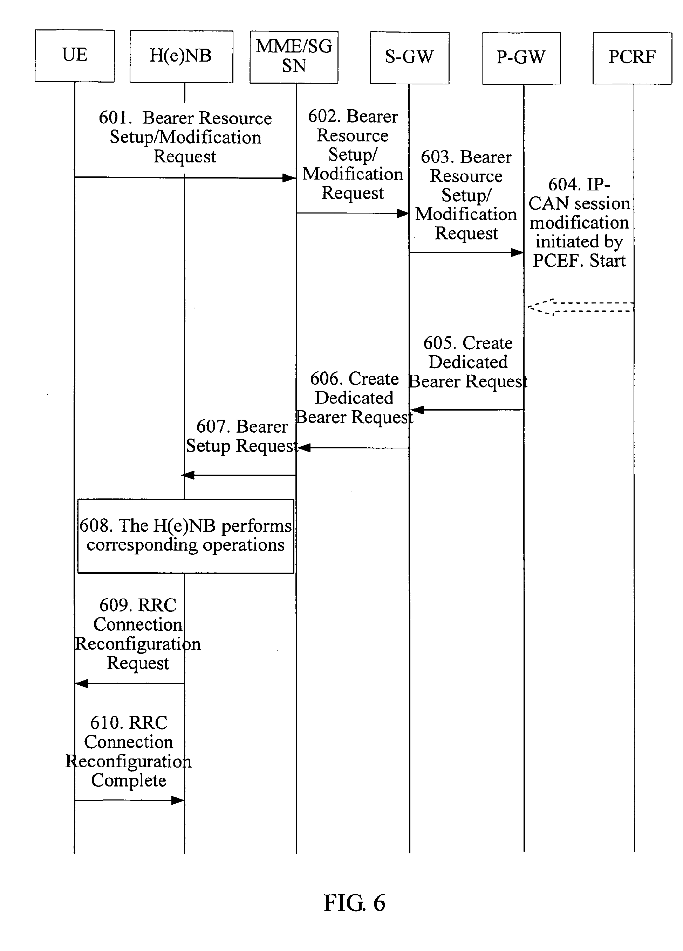

As shown in FIG. 6, the local IP access is initiated in an LTE core network. The local IP access indication may be carried to an SGW, a PGW, and a PCRF through steps 602-606. The SGW, PGW, and PCRF perform corresponding operations accordingly, for example, create no more link between the H(e)NB and the PGW for this service. This application scenario includes the following steps:
Step 601: When the UE initiates local IP access connection, the UE sends a Local IP Setup message to the core network node through a NAS message. For details, refer to step 301 in the foregoing embodiment.
Step 602: The MME sends a message to the SGW. This message may be formed by adding properly IEs into an existing signaling. For example, the message for carrying the corresponding information may be a Request Bearer Resource Setup/Modification message.
Step 603: The SGW sends a message to the PGW. This message may be formed by adding properly IEs into an existing signaling. For example, the message for carrying the corresponding information may be a Request Bearer Resource Setup/Modification message.
Step 604: Signaling interaction is performed between the PGW and the PCRF by reusing the existing PCC protocol.

The message in steps 602-604 may carry a local IP access identifier for the PCRF, PGW, and SGW to perform corresponding operations. The corresponding operations may include: creating no more bearer between the SGW and the PGW for local IP access.

Step 605: The PGW returns a response message to the SGW. This message may be formed by adding properly IEs into an existing signaling.

The message for carrying the corresponding information may be a Create Dedicated Bearer Request message.

Step 606: The SGW returns a response message to the MME. This message may be formed by adding properly IEs into an existing signaling.

The message that may be used for carrying the corresponding information may be a Create Dedicated Bearer Request message.

Step 607: The MME sends a Create Bearer Request message to the H(e)NB. This message carries relevant information about local IP access. For details, refer to step 302 in the embodiment above.

Step 608 is the same as step 303 in the embodiment above.

Step 609: The H(e)NB sends an RRC Connection Reconfiguration Request to the UE.

Step 610: The UE returns an RRC Connection Reconfiguration Complete Response to the H(e)NB.

In Embodiment 1 above, the NodeB may support local IP access, so that the UE can communicate with the home device directly through the NodeB. Further, the existing signaling flow can be reused properly in the implementation procedure so that the technical solutions of the present invention are well compatible. The method provided in Embodiment 1 is easy to be implemented in the implementation procedure.

### Embodiment 2:

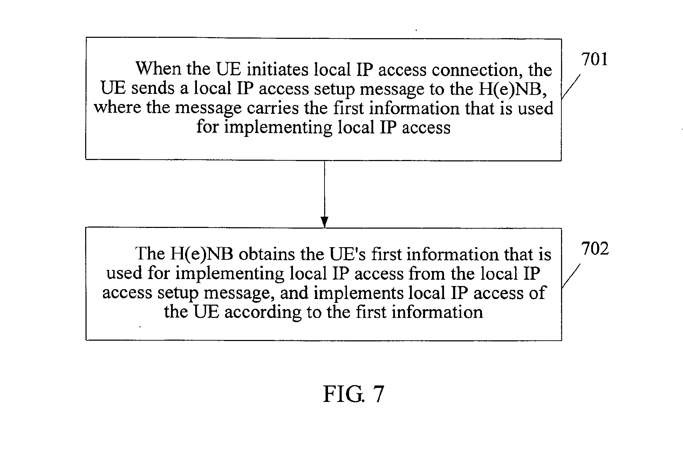

FIG. 7 is a method flowchart provided in Embodiment 2. The method includes the following steps:
Step 701: When the UE initiates local IP access connection, the UE sends a local IP access setup message to the H(e)NB, where the message carries the first information that is used for implementing local IP access.
Step 702: The H(e)NB obtains the UE's first information that is used for implementing local IP access from the local IP access setup message, and implements local IP access of the UE according to the first information.

It should be noted that in this embodiment, in order to perform the local IP access service, the UE needs to support the following function: The UE needs to be capable of judging whether a service data stream is a local IP access data stream or an ordinary service data stream.

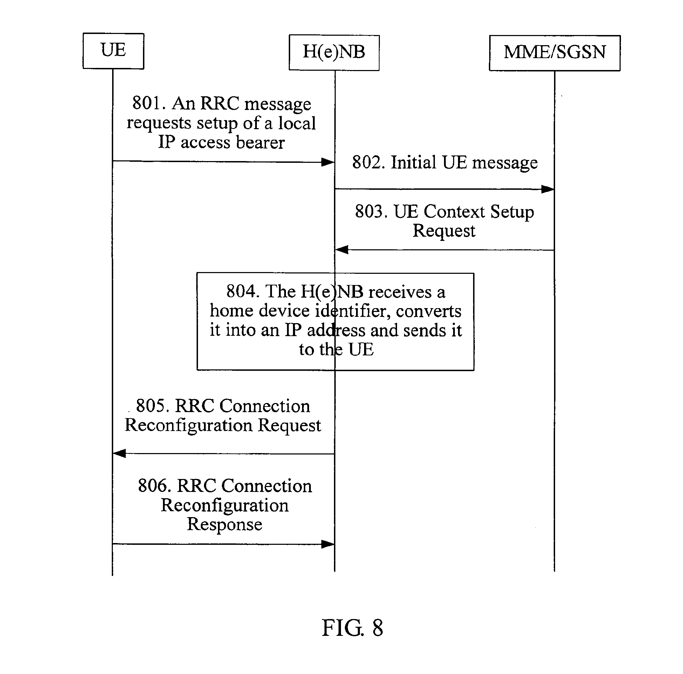

As shown in FIG. 8, the signaling flow includes the following steps:
Step 801: When the UE initiates local IP access connection, the UE sends a Local IP Setup message to the H(e)NB through an RRC message, where the message may be a newly added RRC message that includes information about local IP access, or may be formed by adding IEs into an existing message.

The information about local IP access includes but is not limited to one or multiple of the following: service type indication such as local IP access identifier, called party identifier, QoS-related information, and all other information related to local IP access.

Step 802: The H(e)NB requests the core network node such as MME or SGSN to create a local IP access bearer.

This message needs to carry the information about local IP access to the MME. The information about local IP access includes but is not limited to one or multiple of the following: service type indication such as local IP access identifier, called party identifier, QoS-related information, and all other information related to local IP access.

The local IP access information may be transmitted through a newly added message, or the transmission of the local IP access information may be completed by adding IEs into an existing S1AP message or RANAP message.

Step 803: The MME or SGSN returns a response message to the H(e)NB after performing corresponding operations.

The corresponding operations performed by the MME or SGSN may include: allocating a RAB ID for local IP access, setting up a TFT, granting local IP access, and so on.

Step 804: The H(e)NB performs corresponding operations and initiates setup of an air interface bearer.

The corresponding operations of the H(e)NB include user-plane operations, and the processing method can be implemented with reference to Embodiment 1 above.

Besides, the H(e)NB may create the air interface bearer through a corresponding procedure in the existing protocol. For example, in an LTE system, the air interface bearer is created through an RRC Connection reconfiguration procedure; in a UMTS, the air interface bearer is created through a radio bearer setup procedure.

Step 805: The H(e)NB sends an RRC Connection Reconfiguration Request to the UE.

Step 806: The UE returns an RRC Connection Reconfiguration Response to the H(e)NB.

In Embodiment 2, the NodeB can support local IP access, so that the UE can communicate with the home device directly through the NodeB. Further, the existing signaling flow can be reused properly in the implementation procedure so that the technical solutions of the present invention are well compatible. Further, the NodeB and the core network node in Embodiment 2 can obtain relevant information required for local IP access, and perform different operations according to different service data streams, thereby reducing the processing load of certain nodes.

### Embodiment 3:

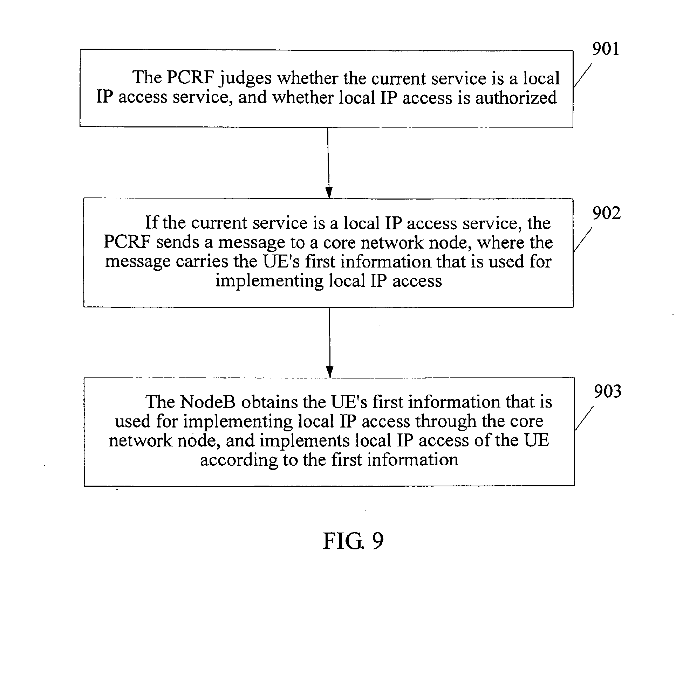

FIG. 9 is a method flowchart provided in Embodiment 3 of the present invention. The method includes the following steps:
Step 901: The PCRF judges whether the current service is a local IP access service.
Step 902: If the current service is a local IP access service, the PCRF sends a message to the core network node, where the message carries the UE's first information that is used for implementing local IP access.
Step 903: The NodeB obtains the UE's first information that is used for implementing local IP access through the core network node, and implements local IP access of the UE according to the first information.

Preferably, if the current service is a local IP access service, the foregoing procedure may further include: The PCRF further judges whether the local IP access is an authorized local IP access; if the local IP access is an authorized local IP access, the PCRF goes on to the next step of the procedure. The judging whether the local IP access is an authorized local IP access may be implemented by a core network node or a NodeB.

In this embodiment, the local IP access is transparent to the UE. Therefore, this embodiment is specially suitable when the UE is unable to judge whether a service is a local IP access service, and especially suitable when the UE makes no judgment about the local IP access for certain reasons such as old version of the UE.

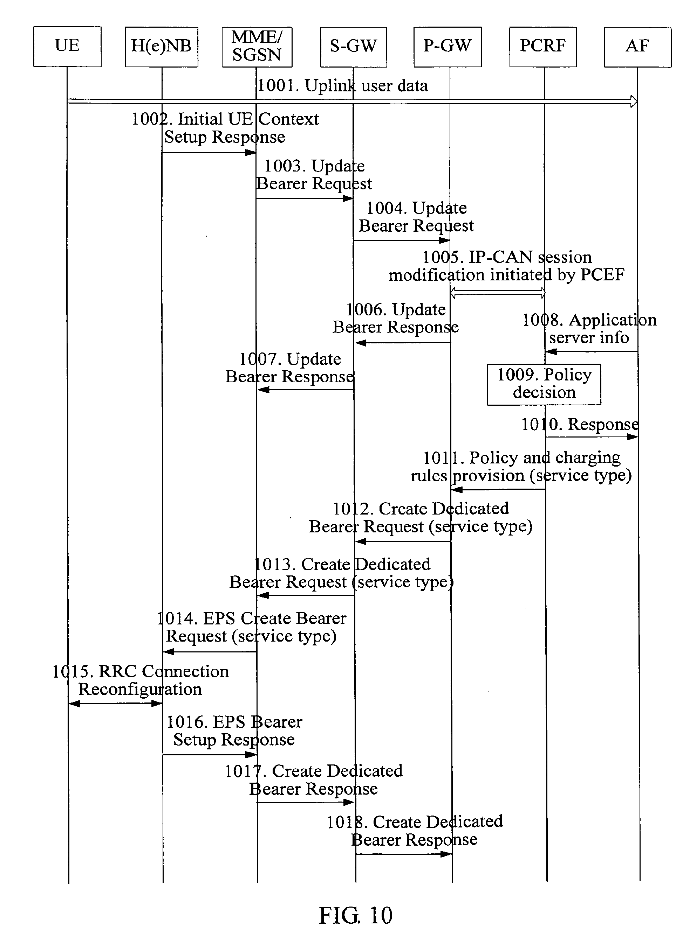

As shown in FIG. 10, the signaling flow includes the following steps:
Step 1001: The UE sends uplink user data to an Application Function (AF) through a SIP signaling. The SIP signaling includes a home device identifier.
Steps 1002-1007: An identifier of an H(e)NB or an identifier of a Closed Subscriber Group (CSG) is sent to the PCRF through an existing signaling flow.
Step 1008: The AF forwards the home device identifier to the PCRF by using the existing Application Service Info.
Step 1009: The PCRF judges whether the service initiated by the UE is a local IP access service and whether the local IP access service is authorized. The basis of judging may include:

The PCRF judges whether the RAN node that currently serves the UE is H(e)NB node according to the obtained identifier of the H(e)NB or CSG. The SGW may send to the PGW the identifier of the H(e)NB or CSG through an Initial Context Setup Response message and an Update Bearer Request message, where the H(e)NB or CSG currently serves the UE; and then the identifier of the H(e)NB or CSG is forwarded to the PCRF. Alternatively, the PCRF obtains the identifier of the H(e)NB or CSG in another way: The UE sends to the AF the identifier of the H(e)NB or CSG through a SIP signaling, and then sends to the PCRF the identifier of the H(e)NB or CSG through Application Service Info.

The PCRF determines that the H(e)NB or CSG where the UE is located and the destination home device of the service initiated by the UE are in a home network according to obtained registration information of a relevant home device in the H(e)NB or CSG. The registration information may be a list of home devices, and is obtained from a server that stores relevant information of the UE, or a server (SRP or HSS) that stores relevant information of the CSG.

The PCRF determines that the UE under the H(e)NB is authorized to perform the local IP access service for the destination home device according to the obtained subscription information of the UE. The subscription information of the UE may be obtained through a subscription repository. The information may be a table of mapping relationships between the identifier of the H(e)NB or CSG and the identifier of the UE, and an entry in the table indicates whether the UE under the H(e)NB or CSG may perform the local IP access service. Further, the information may indicate whether the UE is entitled to perform local IP access for a certain destination home device under a specific H(e)NB or CSG.

Step 1010: The PCRF sends a response message to the AF.

Step 1011: By adding IEs related to local IP access into the message provided by the PCRF, the PCRF sends the identifier of the local IP access service and the relevant information to the PGW.

Step 1012: By adding IEs related to local IP access into a Create Dedicated Bearer Request message, the PGW sends the identifier of the local IP access service and the relevant information to the SGW.

Step 1013: By adding IEs related to local IP access into the Create Dedicated Bearer Request message, the SGW sends the identifier of the local IP access service and the relevant information to the MME/SGSN.

Step 1014: By adding IEs related to local IP access into a Create Bearer Request message of an Evolved Packet System (EPS), the MME/SGSN sends the identifier of the local IP access service and the relevant information to the H(e)NB.

The added IEs include the identifier of the local IP access service, and may further include but are not limited to: QoS parameters, destination home device identifier, and EPS bearer identifier. It should be noted that because the EPS bearer identifier in the current system is allocated by the MME, the EPS bearer identifier parameter needs to be added in the message in step 1018, but is not required to be added in the message in other steps.

Step 1015: RRC connection reconfiguration is implemented between the UE and the H(e)NB.

Step 1016: The H(e)NB sends an EPS Bearer Setup Response to the MME or SGSN.

Step 1017: The MME or SGSN sends a Create Dedicated Bearer Response to the SGW.

Step 1018: The SGW sends the Create Dedicated Bearer Response to the PGW.

In Embodiment 3 of the present invention, the NodeB can support local IP access, so that the UE can communicate with the home device directly through the NodeB. Further, the existing signaling flow can be reused properly in the implementation procedure so that the technical solutions of the present invention are well compatible. In Embodiment 3 of the present invention, it is the PCRF that is responsible for judging whether the current service is a local IP access service or an ordinary service. Therefore, for the UE, the procedure of setting a local IP access service is completely the same as the procedure of setting up an ordinary service. That is, the local IP access is completely transparent to the UE, which reduces processing load of the UE.

Persons of ordinary skill in the art understand that different embodiments above may be combined for implementation. For example, if the UE is able to judge that the service is a local IP access service, the local IP access may be implemented according to Embodiment 1 or Embodiment 2; and, if the UE is unable to judge that the service is a local IP access service for certain reasons, the local IP access may be implemented according to Embodiment 3.

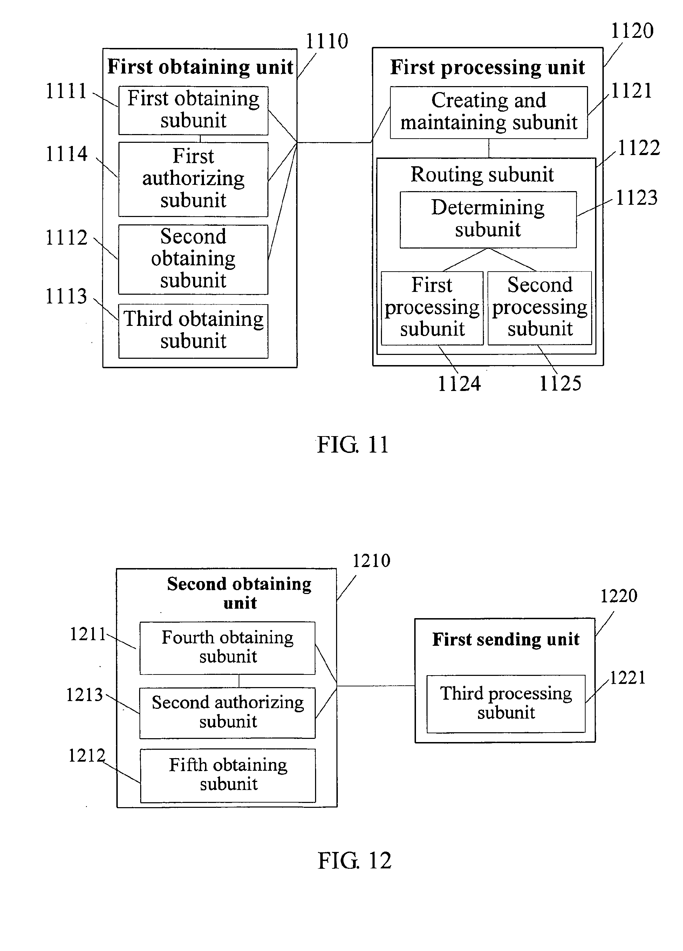

FIG. 11 is a schematic structure diagram of an HNB according to Embodiment 4 of the present invention. The HNB includes a first obtaining unit 1110 and a first processing unit 1120.

The first obtaining unit 1110 is configured to obtain UE's first information that is used for implementing local IP access; and

The first processing unit 1120 is configured to implement local IP access of the UE according to the first information obtained by the first receiving unit 1110.

Preferably, the first obtaining unit 1110 specifically includes a first obtaining subunit 1111, a second obtaining subunit 1112, and a third obtaining subunit 1113.

The first obtaining subunit 1111 is configured to: receive a local IP access setup message sent by the UE, and obtain the UE's first information that is used for implementing local IP access from the local IP access setup message. Specifically, the local IP access setup message is sent by the UE through an RRC message or NAS message. The NAS message and the RRC message are newly added messages, and the messages carry the first information about the local IP access; or, the first information about the local IP access is carried in the NAS message or RRC message by adding IEs into an existing message.

The second obtaining subunit 1112 is configured to: obtain, through a core network node, the first information that is used for implementing local IP access, where the first information is carried in the local IP access setup message sent by the UE to the core network node. Specifically, the local IP access setup message is sent by the UE through an RRC message or NAS message. The NAS message and the RRC message are newly added messages, and the messages carry the first information about the local IP access; or, the first information about the local IP access is carried in the NAS message or RRC message by adding IEs into an existing message.

The third obtaining subunit 1113 is configured to obtain the UE's first information that is used for implementing local IP access from a PCRF through the core network node.

Further, the first obtaining unit 1110 includes a first authorizing subunit 1114 which is configured to perform authorization, according to the local IP access setup message received by the first obtaining subunit 1111, on whether to authorize the UE to perform local IP access or not.

Preferably, the first processing unit 1120 may include a creating and maintaining subunit 1121 and a routing subunit 1122.

The creating and maintaining subunit 1121 is configured to dynamically create and maintain a local IP access routing table of the UE according to the destination IP address.

The routing subunit 1122 is configured to route data correctly according to the local IP access routing table. Further, the routing subunit 1122 includes: a determining subunit 1123, configured to determine whether a resolved destination address exists in the local IP access routing table; a first processing subunit 1124, configured to route the data locally if the determining subunit 1123 determines that the resolved destination address exists in the local IP access routing table; and a second processing subunit 1125, configured to forward the data to an S1 interface or Iu interface if the determining subunit 1123 determines that the resolved destination address does not exist in the local IP access routing table.

FIG. 12 is a schematic structure diagram of a core network node according to Embodiment 5 of the present invention. The core network node includes:
a second obtaining unit 1210, configured to obtain UE's first information that is used for implementing local IP access; and
a first sending unit 1220, configured to send the first information that is used for implementing local IP access.

Preferably, the second obtaining unit 1210 includes a fourth obtaining subunit 1211 and a fifth obtaining subunit 1212.

The fourth obtaining subunit 1211 is configured to: receive a local IP access setup message sent by the UE, and obtain the first information that is used for implementing local IP access from the local IP access setup message. Specifically, the local IP access setup message is sent by the UE through an RRC message or NAS message. The NAS message and the RRC message are newly added messages, and the messages carry the first information about the local IP access; or, the first information about the local IP access is carried in the NAS message or RRC message by adding IEs into an existing message.

The fifth obtaining subunit 1212 is configured to obtain from a PCRF the UE's first information that is used for implementing local IP access.

Further, the second obtaining unit 1210 includes a second authorizing subunit 1213, which is configured to perform authorization, according to the local IP access setup message received by the fourth obtaining subunit 1211, on whether to authorize the UE to perform local IP access or not.

Further, the first sending unit 1220 may include:
a third processing subunit 1221, configured to add IEs into a message that is sent to other core network node or the NodeB so as to carry the first information about local IP access.

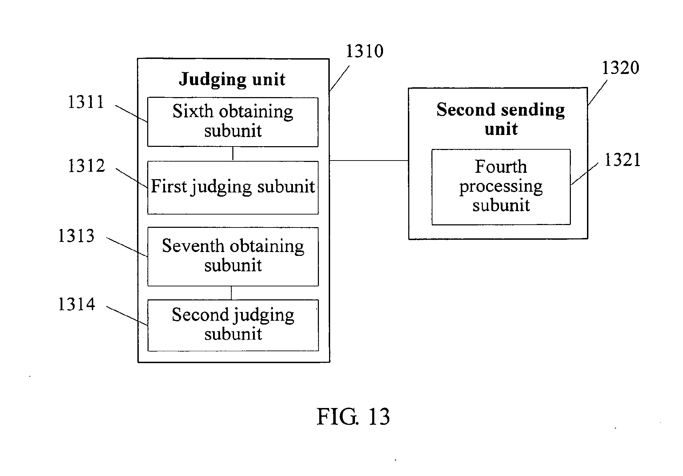

FIG. 13 is a schematic structure diagram of a PCRF according to Embodiment 6 of the present invention. The PCRF includes a judging unit 1310 and a second sending unit 1320.

The judging unit 1310 is configured to judge whether a current service is a local IP access service; and

The second sending unit 1320 is configured to transmit UE's first information that is used for implementing local IP access to a NodeB through a core network node if the judging unit 1310 judges that the current service is a local IP access service.

Preferably, the judging unit 1310 includes a sixth obtaining subunit 1311, a first judging subunit 1312, a seventh obtaining subunit 1313, and a second judging subunit 1314.

The sixth obtaining subunit 1311 is configured to obtain a home device identifier from an AF, where the identifier is sent by the UE.

The first judging subunit 1312 is configured to judge that the current service is a local IP access service according to the home device identifier obtained by the sixth obtaining subunit 1311.

The seventh obtaining subunit 1313 is configured to: obtain an identifier of a NodeB or CSG, and/or registration information of a relevant home device in the NodeB or CSG, and/or subscription information of the UE.

The second judging subunit 1314 is configured to: determine that a RAN node currently serving the UE is an H(e)NB node according to the identifier of the NodeB or CSG obtained by the seventh obtaining subunit 1313; and/or determine that the NodeB or CSG where the UE is located and the destination home device of the service initiated by the UE are in a home network according to the registration information of the relevant home device in the NodeB or CSG, where the registration information is obtained by the seventh obtaining subunit 1313; and/or determine, according to the UE subscription information obtained by the seventh obtaining subunit 1313, that the UE under the NodeB is authorized to perform the local IP access service for the destination home device; and further judge whether the local IP access is an authorized local IP access, and trigger the second sending unit 1320 when the local IP access is an authorized local IP access.

Preferably, the second sending unit 1320 includes a fourth processing subunit 1321, which is configured to add IEs into a message that is sent to a PGW so as to carry the first information about local IP access, so that the second sending unit 1320 transmits the first information that is used for implementing local IP access to the NodeB through the PGW, SGW and MME in sequence, or through the PGW, SGW, and SGSN in sequence.

Embodiment 7 of the present invention provides a system for implementing local IP access. The system can communicate with the UE, and the UE is able to judge whether a service data stream is a local IP access data stream or an ordinary service data stream. The system includes a NodeB and a core network node.

The NodeB is configured to obtain UE's first information that is used for implementing local IP access, and implement local IP access of the UE according to the first information; and

The core network node is configured to assist the NodeB in obtaining the UE's first information that is used for implementing local IP access.

Preferably, the core network node receives a local IP access setup message sent by the UE, and obtains the first information that is used for implementing local IP access from the local IP access setup message.

An eighth embodiment of the present invention provides a system for implementing local IP access. The system can communicate with the UE, and the UE is unable to judge whether a service data stream is a local IP access data stream or an ordinary service data stream. The system includes a NodeB, a core network node, and PCRF.

The NodeB is configured to obtain UE's first information that is used for implementing local IP access, and implement local IP access of the UE according to the first information;

The core network node is configured to assist the NodeB in obtaining the UE's first information that is used for implementing local IP access; and

The PCRF is configured to judge whether the current service is a local IP access service, and transmit the UE's first information that is used for implementing local IP access to the core network node if determining that the current service is a local IP access service.

Preferably, the core network node receives a local IP access setup message sent by the UE, and obtains the first information that is used for implementing local IP access from the local IP access setup message; or the core network node obtains the UE's first information that is used for implementing local IP access from the PCRF.

It should be noted that the structures of the NodeB, core network node and PCRF in Embodiment 7 and Embodiment 8 can refer to the detailed descriptions in Embodiments 3, 4, 5 above respectively, and are not described here any further.

Persons of ordinary skill in the art should understand that all or part of the steps of the method in the embodiments of the present invention may be implemented by a program instructing relevant hardware. The program may be stored in computer readable storage media. When the program runs, the program executes one of the steps or any combination of the steps of the method embodiments.

All functional units in the embodiments of the present invention may be stand-alone, or integrated into a processing module, or two or more of the units are integrated into one module. The integrated module may be implemented through hardware or a software function module. When being implemented as a software function module and sold or used as a stand-alone product, the integrated module may be stored in computer-readable storage media.

The storage media may be a ROM, magnetic disk, or CD-ROM.

The present invention provides a method, a system, and a network device for implementing local IP access, so that the NodeB can support local IP access and the UE can communicate with the home device directly through the NodeB. Further, when the UE initiates a local IP access service, the relevant nodes in a RAN and a core network can obtain information required for local IP access, and perform different operations according to different service data streams, thereby completing the whole service procedure of local IP access and reducing the processing load of certain nodes.

A method, a system and a network device for implementing local IP access provided by the present invention are described in detail above. The principle and implementation modes of the present invention are described through some exemplary embodiments, and the above embodiments are merely illustrated for better understanding the technical solutions of the present invention. Meanwhile, those skilled in the art can make variations to the invention on the basis of the embodiments and application scope of the present invention without departing from the idea of the invention. The contents of the specification cannot be understood as a limitation on the present invention.

## Claims

1. A method for implementing local Internet Protocol, IP, access, comprising:
obtaining User Equipment's, UE's, first information that is used for implementing local IP access; and
implementing local IP access of the UE according to the first information.

2. The method for implementing local IP access according to claim 1, wherein:
the obtaining the UE's first information that is used for implementing local IP access comprises:
receiving, by a NodeB, a local IP access setup message sent by the UE, and obtaining the UE's first information that is used for implementing local IP access from the local IP access setup message; or
obtaining, by the NodeB, through a core network node, the first information that is used for implementing local IP access and is sent by the UE, wherein the first information is carried in the local IP access setup message sent by the UE to the core network node.

3. The method for implementing local IP access according to claim 2, wherein:
the receiving, by the NodeB, the local IP access setup message sent by the UE, comprises:
receiving, by the NodeB, the local IP access setup message sent by the UE through a Radio Resource Control, RRC, message or Non Access Stratum, NAS, message.

4. The method for implementing local IP access according to claim 3, wherein:
the NAS message and the RRC message are newly added messages, where the messages include the first information about the local IP access; or
the first information about the local IP access is carried in the NAS message or RRC message by adding IEs into an existing message.

5. The method for implementing local IP access according to claim 1, wherein:
the obtaining the UE's first information that is used for implementing local IP access specifically comprises:
obtaining, by the NodeB, the UE's first information that is used for implementing local IP access from a Policy and Charging Rules Function, PCRF, through a core network node.

6. The method for implementing local IP access according to claim 5, wherein:
the obtaining, by the NodeB, the UE's first information that is used for implementing local IP access from the PCRF through the core network node, comprises:
obtaining, by the PCRF, a home device identifier from an Application Function, AF, wherein the identifier is sent by the UE; and judging that a current service is a local IP access service according to the home device identifier; and
transmitting, by the PCRF, the first information that is used for implementing local IP access to the NodeB through a Packet Data Network, PDN, Gateway, PGW, a Serving Gateway, SGW, and a Mobility Management Entity, MME, in sequence, or through the PGW, SGW, and a Serving General Packet Radio Service, GPRS, Supporting Node, SGSN, in sequence.

7. The method for implementing local IP access according to claim 6, wherein:
the judging, by the PCRF, whether the current service is a local IP access service, comprises:
judging whether the local IP access is an authorized local IP access.

8. The method for implementing local IP access according to claim 7, wherein:
bases for the PCRF to judge whether the local IP access is an authorized local IP access comprise at least one of the following:
determining, by the PCRF, that a Radio Access Network, RAN, node currently serving the UE is a NodeB node according to an obtained identifier of the NodeB or a Closed Subscriber Group, CSG; and/or
determining that the NodeB or CSG where the UE is located and a home device of a service initiated by the UE are in a home network according to obtained registration information of a relevant home device in the NodeB or CSG; and/or
determining, according to obtained subscription information of the UE, that the UE under the NodeB is authorized to perform local IP access services for the home device.

9. The method for implementing local IP access according to claim 2 or claim 5, wherein:
the implementing the local IP access of the UE comprises:
dynamically creating and maintaining a local IP access routing table of the UE according to a destination IP address; and
routing data correctly according to the local IP access routing table.

10. The method for implementing local IP access according to claim 9, wherein:
the routing data correctly according to the local IP access routing table comprises:
determining whether a resolved destination address exists in the local IP access routing table, and, if the resolved destination address exists in the local IP access routing table, routing the data locally, otherwise, forwarding the data to an S1 interface or Iu interface.

11. The method for implementing local IP access according to claim 2, wherein:
after the NodeB or core network node receives the local IP access setup message sent by the UE, the method further comprises:
performing authorization on whether to authorize the UE to perform local IP access or not.

12. The method for implementing local IP access according to claim 1, wherein:
the first information comprises a service type indication.

13. A NodeB, comprising:
a first obtaining unit, configured to obtain User Equipment's, UE's, first information that is used for implementing local Internet Protocol, IP, access; and
a first processing unit, configured to implement local IP access of the UE according to the first information.

14. The NodeB according to claim 13, wherein the first obtaining unit specifically comprises:
a first obtaining subunit, configured to: receive a local IP access setup message sent by the UE, and obtain the UE's first information that is used for implementing local IP access from the local IP access setup message.

15. The NodeB according to claim 14, wherein the first obtaining unit further comprises:
a first authorizing subunit, configured to perform authorization, according to the local IP access setup message received by the first obtaining subunit, on whether to authorize the UE to perform local IP access or not.

16. The NodeB according to claim 13 or claim 14, wherein the first obtaining unit further comprises:
a second obtaining subunit, configured to obtain, through a core network node, the first information that is used for implementing local IP access and is sent by the UE, wherein the first information is carried in the local IP access setup message sent by the UE to the core network node.

17. The NodeB according to claim 16, wherein the first obtaining unit comprises:
a third obtaining subunit, configured to obtain the UE's first information that is used for implementing local IP access from a Policy and Charging Rules Function, PCRF, through the core network node.

18. The NodeB according to claim 13, wherein the first processing unit specifically comprises:
a creating and maintaining subunit, configured to dynamically create and maintain a local IP access routing table of the UE according to a destination IP address; and
a routing subunit, configured to route data correctly according to the local IP access routing table.

19. The NodeB according to claim 18, wherein the routing subunit comprises:
a determining subunit, configured to determine whether a resolved destination address exists in the local IP access routing table;
a first processing subunit, configured to route the data locally if the determining subunit determines that the resolved destination address exists in the local IP access routing table; and
a second processing subunit, configured to forward the data to an S1 interface or Iu interface if the determining subunit determines that the resolved destination address does not exist in the local IP access routing table.

20. A core network node, comprising:
a second obtaining unit, configured to obtain User Equipment's, UE's, first information that is used for implementing local Internet Protocol, IP, access; and
a first sending unit, configured to send the first information that is used for implementing local IP access.

21. The core network node according to claim 20, wherein the second obtaining unit specifically comprises:
a fourth obtaining subunit, configured to: receive a local IP access setup message sent by the UE, and obtain the first information that is used for implementing local IP access from the local IP access setup message.

22. The core network node according to claim 21, wherein the second obtaining unit further comprises:
a second authorizing subunit, configured to perform authorization, according to the local IP access setup message received by the fourth obtaining subunit, on whether to authorize the UE to perform local IP access or not.

23. The core network node according to claim 20 or claim 21, wherein the second obtaining unit further comprises:
a fifth obtaining subunit, configured to obtain the UE's first information that is used for implementing local IP access from a Policy and Charging Rules Function, PCRF.

24. The core network node according to claim 23, wherein the first sending unit comprises:
a third processing subunit, configured to add Information Elements, IEs, into a message that is sent to other core network node or a NodeB so as to carry the first information that is used for implementing local IP access.

25. A Policy and Charging Rules Function, PCRF, comprising:
a judging unit, configured to judge whether a current service is a local Internet Protocol, IP, access service; and
a second sending unit, configured to transmit User Equipment's, UE's, first information that is used for implementing local IP access to a NodeB through a core network node if the judging unit determines that the current service is a local IP access service.

26. The PCRF according to claim 25, wherein the judging unit comprises:
a sixth obtaining subunit, configured to obtain a home device identifier from an Application Function, AF, wherein the identifier is sent by the UE; and
a first judging subunit, configured to judge whether a current service is a local IP access service according to the home device identifier obtained by the sixth obtaining subunit.

27. The PCRF according to claim 25, wherein the judging unit further comprises:
a seventh obtaining subunit, configured to: obtain an identifier of a NodeB or Closed Subscriber Group, CSG, and/or registration information of a relevant home device in the NodeB or CSG, and/or subscription information of the UE; and
a second judging subunit, configured to: determine that a Radio Access Network, RAN, node currently serving the UE is a Home evolved NodeB, H(e)NB, node according to the identifier of the NodeB or CSG obtained by the seventh obtaining subunit; and/or determine that the NodeB or CSG where the UE is located and a destination home device of a service initiated by the UE are in a home network according to the registration information of the relevant home device in the NodeB or CSG, where the registration information is obtained by the seventh obtaining subunit; and/or determine, according to the UE subscription information obtained by the seventh obtaining subunit, that the UE under the NodeB is authorized to perform local IP access services for the destination home device; and further judge whether the local IP access is an authorized local IP access, and trigger the second sending unit if the local IP access is an authorized local IP access.

28. The PCRF according to claim 25, wherein the second sending unit comprises:
a fourth processing subunit, configured to: add Information Elements, IEs, into a message sent to a Packet Data Network, PDN, Gateway, PGW, so as to carry the first information about local IP access so that the second sending unit transmits the first information that is used for implementing local IP access to the NodeB through the PGW, a Serving Gateway, SGW, and a Mobility Management Entity, MME, in sequence, or through the PGW, SGW, and a Serving General Packet Radio Service, GPRS, Supporting Node, SGSN, in sequence.

29. A system for implementing local Internet Protocol, IP, access, wherein the system can communicate with User Equipment, UE, and comprises:
a NodeB, configured to obtain UE's first information that is used for implementing local Internet Protocol, IP, access, and implement local IP access of the UE according to the first information; and
a core network node, configured to assist the NodeB in obtaining the UE's first information that is used for implementing local IP access.

30. The system for implementing local IP access according to claim 29, further comprising:
a Policy and Charging Rules Function, PCRF, configured to judge whether a current service is a local IP access service, and transmit the UE's first information that is used for implementing local IP access to the core network node if judging that the current service is a local IP access service.

31. The system for implementing local IP access according to claim 29 or claim 30, wherein:
the core network node, configured to assist the NodeB in obtaining the UE's first information that is used for implementing local IP access is specifically:
the core network node, configured to receive a local IP access setup message sent by the UE, and obtaining the first information that is used for implementing local IP access from the local IP access setup message; or
the core network node, configured to obtain from the PCRF the UE's first information that is used for implementing local IP access.
